# EUROPEAN PATENT SPECIFICATION

(11) **EP 4 580 022 B1**
(45) Date of publication and mention of the grant of the patent: **30.09.2026**
(21) Application number: 24222616.5
(22) Date of filing: 20.12.2024
(51) Int. Cl.: H02M 1/42, H02M 3/335

(54) **POWER CONVERTER AND CONTROL METHOD THEREOF**
STROMWANDLER UND STEUERUNGSVERFAHREN DAFÜR
CONVERTISSEUR DE PUISSANCE ET SON PROCÉDÉ DE COMMANDE

(30) Priority: 29.12.2023 CN 202311862440
(43) Date of publication of application: 02.07.2025
(73) Proprietor: Huawei Digital Power Technologies Co., Ltd., Shenzhen, Guangdong 518043 (CN)
(72) Inventor: YANG, Zezhou, Shenzhen, 518043 (CN); HU, Xiaolu, Shenzhen, 518043 (CN); TENG, Da, Shenzhen, 518043 (CN); GAN, Jiahu, Shenzhen, 518043 (CN); CHEN, Shaoxian, Shenzhen, 518043 (CN)
(74) Representative: Gill Jennings & Every LLP

(56) References cited:
- US-A1- 2018 076 723
- US-A1- 2023 111 992
- US-B1- 10 917 006
- US-B2- 7 889 517
- MALLIK AYAN ET AL: "Maximum Efficiency Tracking of an Integrated Two-Staged AC-DC Converter Using Variable DC-Link Voltage", IEEE TRANSACTIONS ON INDUSTRIAL ELECTRONICS, IEEE SERVICE CENTER, PISCATAWAY, NJ, USA, vol. 65, no. 11, 1 November 2018 (2018-11-01), pages 8408 - 8421, XP011685932, ISSN: 0278-0046, [retrieved on 20180626], DOI: 10.1109/TIE.2018.2807364
- HUANG ZHENGRONG ET AL: "Critical-Mode-Based Soft-Switching Modulation for High-Frequency Three-Phase Bidirectional AC-DC Converters", IEEE TRANSACTIONS ON POWER ELECTRONICS INSTITUTE OF ELECTRICAL AND ELECTRONICS ENGINEERS, USA, vol. 34, no. 4, 1 April 2019 (2019-04-01), pages 3888 - 3898, XP011714156, ISSN: 0885-8993, [retrieved on 20190308], DOI: 10.1109/TPEL.2018.2854302

## Description

### TECHNICAL FIELD

This application relates to the field of energy technologies, and in particular, to a power converter and a control method thereof.

### BACKGROUND

Continuous evolution of digital society and digital energy drives a capacity of a power system to continuously expand. To improve competitiveness of a power conversion device and provide an optimal power solution, a control solution needs to be optimized to improve efficiency of the power conversion device. The power conversion device is configured to convert an alternating current voltage output by a power grid into a direct current voltage required by a load device. A rectifier in the power conversion device is generally in a two-level topology, and the rectifier includes a previous-stage power factor correction (power factor correction, PFC) circuit and a post-stage direct current-to-direct current (direct current-to-direct current, DC-DC) converter circuit.

At present, a highest alternating current input voltage committed in specifications of the rectifier is an alternating current of 290 V To output a maximum power within a full output voltage range, a peak value of a passive rectification voltage corresponding to the alternating current of 290 V is 410 V Currently, a response policy for a high-voltage alternating current input working condition is to raise, to a specific value higher than 410 V, for example, about 430 V, a direct current voltage of a direct current bus that is connected to a direct current side of the PFC circuit, to ensure stable operating of the PFC circuit. After the direct current voltage of the direct current bus is raised, pressure is transferred to the DC-DC converter circuit. As a result, the DC-DC converter circuit operates in a high-frequency and large turn-off current state when outputting a low voltage, and a loss sharply increases. For example, if the load device connected to the DC-DC converter circuit requires the low voltage, for example, 48 V, an output side of the DC-DC converter circuit outputs the low voltage, and a voltage regulation ratio of the DC-DC converter circuit is 0.8. To be far away from a resonance point, working frequency of the DC-DC converter circuit needs to be increased. As a result, heat generated by a heating device like a switch transistor and a resonant cavity in the DC-DC converter circuit is increased, which may increase a thermal risk of the power conversion device.

US 2023/111992 A1 describes a Switching Mode Power Supply (SMPS) comprising a power factor correction (PFC) stage and an isolated direct current-to-direct current (DC-DC) converter with a control circuit that selects operating modes based on AC input peak voltage and required output.

### SUMMARY

This application provides a power converter and a control method thereof, to effectively reduce a thermal risk of the power converter.

According to a first aspect, an invention of this application provides a power converter according to claim 1, including a power factor correction circuit, a direct current-to-direct current converter circuit, and a controller. An input end, namely, an alternating current side, of the power factor correction circuit is connected to an alternating current bus and is configured to receive an alternating current voltage of a power grid. An output end, namely, a direct current side, of the power factor correction circuit is connected to a direct current bus and is configured to output a direct current voltage to the direct current bus. An input end of the direct current-to-direct current converter circuit is connected to the direct current bus and is configured to obtain the direct current voltage from the direct current bus. An output end of the direct current-to-direct current converter circuit is connected to a load through an output bus and is configured to output a voltage to the load. The power factor correction circuit is configured to: convert an input alternating current voltage into a direct current voltage and output the direct current voltage to the direct current-to-direct current converter circuit. The direct current-to-direct current converter circuit is configured to: perform voltage conversion on the direct current voltage and output a converted voltage to the load. The controller is separately connected to the alternating current bus, the direct current bus, and the output bus. The controller may obtain, via a collection circuit, parameters such as an alternating current voltage and an alternating current on the alternating current bus, a direct current voltage and a direct current on the direct current bus, and an output voltage and an output current on the output bus. The power factor correction circuit includes components such as at least one switch transistor and an inductor. The controller may control a working state of the switch transistor in the power factor correction circuit based on collected parameters, to adjust and control the direct current voltage output by the power factor correction circuit.

In this application, a new adjustment and control policy, that is, a hybrid modulation mode, is proposed. In the hybrid modulation mode, the controller directly determines a first reference value of the direct current voltage based on output efficiency of the direct current-to-direct current converter circuit, where the first reference value may be less than a peak value of the alternating current voltage, and then generates a first pulse width modulation PWM signal based on the first reference value. When an instantaneous value of the alternating current voltage is less than the first reference value, the controller may control a turned-on/turned-off state of at least one switch transistor in the power factor correction circuit by using the first PWM signal. That is, use a conventional PWM modulation mode to maintain an average value of the direct current voltage output by the power factor correction circuit at the first reference value. When the instantaneous value of the alternating current voltage is greater than or equal to the first reference value, the controller controls the at least one switch transistor in the power factor correction circuit to keep in the turned-on state, so that the power factor correction circuit operates in a passive rectification state. Then, energy input by the alternating current side is freely pumped into the direct current bus after passing through a component in the power factor correction circuit.

In the conventional technology, to ensure stable operating of the power factor correction circuit, the direct current voltage is set to increase as the alternating current voltage increases. As a result, when the alternating current voltage is high and an output voltage of the direct current-to-direct current converter circuit is low, switching frequency needs to be increased for the direct current-to-direct current converter circuit to meet a requirement of a working condition. This causes an increase in an amount of heat generated and an increase in a thermal risk of the power converter. In this application, in the hybrid modulation mode, the direct current voltage is set to be determined by the output efficiency of the direct current-to-direct current converter circuit, and not to change as the alternating current voltage changes. Therefore, a stable operating state of the direct current-to-direct current converter circuit can be ensured within a full voltage range of the alternating current voltage, and heat dissipation performance can be effectively optimized, especially in a harsh working condition, thereby avoiding the thermal risk, effectively improving stability and reliability of a power system, and improving competitiveness. When the alternating current voltage is high and the output voltage of the direct current-to-direct current converter circuit is low, for example, in a harsh working condition of an AC of 290 V to a DC of 48 V, compared with the conventional technology in which the direct current voltage decreases significantly, the hybrid modulation mode can reduce the switching frequency in the direct current-to-direct current converter circuit by 20%, improve working efficiency by 1%, and improve competitiveness of the power converter. In addition, due to improvement of the switching frequency in the direct current-to-direct current converter circuit, a component design limitation of the direct current-to-direct current converter circuit may be waived, and designs of magnetic components (such as an inductor and a transformer) may be further optimized, thereby improving competitiveness of the entire power system.

In some embodiments of this application, in the full voltage range of the alternating current voltage, the hybrid modulation mode may be used to pull down the direct current voltage, so that the direct current-to-direct current converter circuit keeps operating stably. In this way, when the harsh working condition occurs, that is, the alternating current voltage is high and the output voltage of the direct current-to-direct current converter circuit is low, the thermal risk in which the amount of heat generated is increased because working frequency of the direct current-to-direct current converter circuit needs to be increased can be effectively prevented. A modulation policy of the alternating current voltage within a full input voltage range is optimized to use the hybrid modulation mode, so that stable operating of the direct current-to-direct current converter circuit can be ensured within the full input voltage range of the alternating current voltage, the thermal risk of the power converter can be resolved, and efficiency of a wide input/output range of the power converter can be improved, thereby improving overall commercial competitiveness of the power converter.

In some other embodiments of this application, the direct current voltage may be alternatively pulled down by using the hybrid modulation mode only in a voltage range in which the alternating current voltage may be in a harsh working condition. In this way, the direct current-to-direct current converter circuit operates stably in the harsh working condition, and the thermal risk in which the amount of heat generated is increased because the working frequency of the direct current-to-direct current converter circuit is increased is prevented. Specifically, when determining that the alternating current voltage is greater than or equal to a specified value, the controller may pull down the direct current voltage by using the hybrid modulation mode; and when determining that the alternating current voltage is less than the specified value, the controller may set the direct current voltage to be higher than the peak value of the alternating current voltage by using the conventional PWM modulation mode. Because the alternating current voltage is usually about 220 V, and a highest value of the alternating current voltage may be, for example, 290 V, the specified value may be set to be greater than 250 V When the controller determines that the alternating current voltage is greater than or equal to the specified value, it is considered that the power converter needs to switch the PFC adjustment and control policy to the hybrid modulation mode, to ensure stable operating of the direct current-to-direct current converter circuit and avoid the thermal risk. When the controller determines that the alternating current voltage is less than the specified value, it is considered that the power converter needs to switch back to the PWM modulation mode, to ensure normal operating of the power factor correction circuit and ensure power correction effect.

In the PWM modulation mode, the controller may determine a second reference value of the direct current voltage based on the input alternating current voltage and the output efficiency required by the direct current-to-direct current converter circuit. In addition, to ensure normal operating of the power factor correction circuit, the second reference value may be greater than the peak value of the alternating current voltage. For example, when the alternating current voltage is 220 V, the second reference value may be set to 340 V. Then, the controller may generate a second PWM signal based on the second reference value, and control the turned-on/turned-off state of the at least one switch transistor in the power factor correction circuit by using the second PWM signal, to maintain the direct current voltage output by the power factor correction circuit PFC at the second reference value. A modulation policy in a working condition in which a high alternating current voltage is input is optimized to use the hybrid modulation mode, and the PWM modulation mode can be maintained in a working condition in which a normal alternating current voltage is input, so that an operating state of the direct current-to-direct current converter circuit can be ensured within the full input voltage range of the alternating current voltage, the thermal risk of the power converter can be resolved, and the efficiency of the wide input/output range of the power converter can be improved, thereby improving the overall commercial competitiveness of the power converter.

In this application, a control method for the power converter may be applied to a single-phase alternating current input and a multi-phase alternating current input. The power factor correction circuit may specifically use a single-phase boost chopper (boost) topology structure, or may use a multi-phase parallel boost topology structure. When working in the PWM modulation mode, the power factor correction circuit may specifically work in a critical conduction mode (CRM), a discontinuous conduction mode (DCM), a continuous conduction mode (CCM), a transition mode (TCM), or the like.

The power factor correction circuit includes at least one bridge arm and at least one inductor. The bridge arm includes a first switch transistor and a second switch transistor that are connected in series. The inductor is connected to a connection point of the first switch transistor and the second switch transistor. In accordance with the claimed invention, in the passive rectification state, that is, when the instantaneous value of the alternating current voltage is greater than or equal to the first reference value, the controller controls one of the first switch transistor and the second switch transistor to be in the turned-on state and the other one to be in the turned-off state, so that the inductor is in a resonant state, and switch the turned-on/turned-off state of the first switch transistor and the second switch transistor when a current of the inductor decreases to zero.

In some embodiments of this application, in the hybrid modulation mode, when the instantaneous value of the alternating current voltage is less than the first reference value, the controller may specifically control the turned-on/turned-off state of the first switch transistor and the second switch transistor by using the critical conduction mode (CRM), the discontinuous conduction mode (DCM), the continuous conduction mode (CCM), or the transition mode (TCM).

According to a second aspect, an embodiment of this application further provides a control method for a power converter according to claim 5, including: In a hybrid modulation mode, a first reference value of a direct current voltage output by a power factor correction circuit in the power converter is determined based on output efficiency of a direct current-to-direct current converter circuit in the power converter. The first reference value is less than a peak value of an alternating current voltage input by the power factor correction circuit. A first PWM signal is generated based on the first reference value. When an instantaneous value of the alternating current voltage is less than the first reference value, a turned-on/turned-off state of at least one switch transistor in the power factor correction circuit is controlled by using the first PWM signal. That is, a conventional PWM modulation mode is used to maintain an average value of the direct current voltage output by the power factor correction circuit at the first reference value. When the instantaneous value of the alternating current voltage is greater than or equal to the first reference value, the at least one switch transistor in the power factor correction circuit is controlled to keep in the turned-on state, so that the power factor correction circuit operates in a passive rectification state. Then, energy input by an alternating current side is freely pumped into the direct current bus after passing through a component in the power factor correction circuit.

In the conventional technology, to ensure stable operating of the power factor correction circuit, the direct current voltage is set to increase as the alternating current voltage increases. As a result, when the alternating current voltage is high and an output voltage of the direct current-to-direct current converter circuit is low, switching frequency needs to be increased for the direct current-to-direct current converter circuit to meet a requirement of a working condition. This causes an increase in an amount of heat generated and an increase in a thermal risk of the power converter. In this application, in the hybrid modulation mode, the direct current voltage is set to be determined by the output efficiency of the direct current-to-direct current converter circuit, and not to change as the alternating current voltage changes. Therefore, a stable operating state of the direct current-to-direct current converter circuit can be ensured within a full voltage range of the alternating current voltage, and heat dissipation performance can be effectively optimized, especially in a harsh working condition, thereby avoiding the thermal risk, effectively improving stability and reliability of a power system, and improving competitiveness. When the alternating current voltage is high and the output voltage of the direct current-to-direct current converter circuit is low, for example, in a harsh working condition of an AC of 290 V to a DC of 48 V, compared with the conventional technology in which the direct current voltage decreases significantly, the hybrid modulation mode can reduce the switching frequency in the direct current-to-direct current converter circuit by 20%, improve working efficiency by 1%, and improve competitiveness of the power converter. In addition, due to improvement of the switching frequency in the direct current-to-direct current converter circuit, a component design limitation of the direct current-to-direct current converter circuit may be waived, and designs of magnetic components (such as an inductor and a transformer) may be further optimized, thereby improving competitiveness of the entire power system.

In some embodiments of this application, in the full voltage range of the alternating current voltage, the hybrid modulation mode may be used to pull down the direct current voltage, so that the direct current-to-direct current converter circuit keeps operating stably. In this way, when the harsh working condition occurs, that is, the alternating current voltage is high and the output voltage of the direct current-to-direct current converter circuit is low, the thermal risk in which the amount of heat generated is increased because working frequency of the direct current-to-direct current converter circuit needs to be increased can be effectively prevented. A modulation policy of the alternating current voltage within a full input voltage range is optimized to use the hybrid modulation mode, so that stable operating of the direct current-to-direct current converter circuit can be ensured within the full input voltage range of the alternating current voltage, the thermal risk of the power converter can be resolved, and efficiency of a wide input/output range of the power converter can be improved, thereby improving overall commercial competitiveness of the power converter.

In some other embodiments of this application, the direct current voltage may be alternatively pulled down by using the hybrid modulation mode only in a voltage range in which the alternating current voltage may be in a harsh working condition. In this way, the direct current-to-direct current converter circuit operates stably in the harsh working condition, and the thermal risk in which the amount of heat generated is increased because the working frequency of the direct current-to-direct current converter circuit is increased is prevented. Specifically, when determining that the alternating current voltage is greater than or equal to a specified value, the controller may pull down the direct current voltage by using the hybrid modulation mode; and when determining that the alternating current voltage is less than the specified value, the controller may set the direct current voltage to be higher than the peak value of the alternating current voltage by using the conventional PWM modulation mode. Because the alternating current voltage is usually about 220 V, and a highest value of the alternating current voltage may be, for example, 290 V, the specified value may be set to be greater than 250 V When the controller determines that the alternating current voltage is greater than or equal to the specified value, it is considered that the power converter needs to switch the PFC adjustment and control policy to the hybrid modulation mode, to ensure stable operating of the direct current-to-direct current converter circuit and avoid the thermal risk. When the controller determines that the alternating current voltage is less than the specified value, it is considered that the power converter needs to switch back to the PWM modulation mode, to ensure normal operating of the power factor correction circuit and ensure power correction effect.

In the PWM modulation mode, the controller may determine a second reference value of the direct current voltage based on the input alternating current voltage and the output efficiency required by the direct current-to-direct current converter circuit. In addition, to ensure normal operating of the power factor correction circuit, the second reference value may be greater than the peak value of the alternating current voltage. For example, when the alternating current voltage is 220 V, the second reference value may be set to 340 V. Then, the controller may generate a second PWM signal based on the second reference value, and control the turned-on/turned-off state of the at least one switch transistor in the power factor correction circuit by using the second PWM signal, to maintain the direct current voltage output by the power factor correction circuit PFC at the second reference value. A modulation policy in a working condition in which a high alternating current voltage is input is optimized to use the hybrid modulation mode, and the PWM modulation mode can be maintained in a working condition in which a normal alternating current voltage is input, so that an operating state of the direct current-to-direct current converter circuit can be ensured within the full input voltage range of the alternating current voltage, the thermal risk of the power converter can be resolved, and the efficiency of the wide input/output range of the power converter can be improved, thereby improving the overall commercial competitiveness of the power converter.

In this application, the control method for the power converter may be applied to a single-phase alternating current input and a multi-phase alternating current input. The power factor correction circuit may specifically use a single-phase boost chopper (boost) topology structure, or may use a multi-phase parallel boost topology structure. When working in the PWM modulation mode, the power factor correction circuit may specifically work in a critical conduction mode (CRM), a discontinuous conduction mode (DCM), a continuous conduction mode (CCM), a transition mode (TCM), or the like.

The power factor correction circuit includes at least one bridge arm and at least one inductor. The bridge arm includes a first switch transistor and a second switch transistor that are connected in series. The inductor is connected to a connection point of the first switch transistor and the second switch transistor. In accordance with the claimed invention, in the passive rectification state, that is, when the instantaneous value of the alternating current voltage is greater than or equal to the first reference value, the controller controls one of the first switch transistor and the second switch transistor to be in the turned-on state and the other one to be in the turned-off state, so that the inductor is in a resonant state, and switch the turned-on/turned-off state of the first switch transistor and the second switch transistor when a current of the inductor decreases to zero.

In some embodiments of this application, in the hybrid modulation mode, when the instantaneous value of the alternating current voltage is less than the first reference value, the controller may specifically control the turned-on/turned-off state of the first switch transistor and the second switch transistor by using the critical conduction mode (CRM), the discontinuous conduction mode (DCM), the continuous conduction mode (CCM), or the transition mode (TCM).

For technical effects that can be achieved by any possible design in the second aspect, refer to the technical effects that can be achieved by any possible design in the first aspect. Details are not described herein again. These aspects or another aspect of this application are clearer and more comprehensible in descriptions of the following embodiments.

### BRIEF DESCRIPTION OF DRAWINGS

To describe the technical solutions in embodiments of this application or the background more clearly, the following describes the accompanying drawings used in embodiments of this application or the background.
FIG. 1 is a diagram of a structure of a power converter according to an embodiment of this application;
FIG. 2 is a diagram of a waveform of an alternating current voltage in a hybrid modulation mode;
FIG. 3 is a schematic flowchart of switching a modulation policy of a power converter according to an embodiment of this application;
FIG. 4 is a diagram of a structure of a single-phase PFC circuit in a power converter according to an embodiment of this application;
FIG. 5a is a diagram of a waveform of a single-phase PFC operating in a PWM modulation mode according to an embodiment of this application;
FIG. 5b is a diagram of a waveform of a single-phase PFC operating in a hybrid modulation mode according to an embodiment of this application; and
FIG. 5c is a diagram of another waveform of a single-phase PFC operating in a hybrid modulation mode according to an embodiment of this application.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

In addition, same reference numerals in the figures represent same or similar structures. Therefore, repeated description thereof is omitted. Expressions of locations and directions in this application are described by using the accompanying drawings as an example. The accompanying drawings in this application are merely used to illustrate relative position relationships and do not represent an actual scale.

Currently, in a power system with a conversion function, using a rectifier of single-phase 220 V as an example, when an alternating current input voltage is 290 V, to meet a full-load working requirement, a peak value of a passive rectification voltage corresponding to the alternating current of 290 V is 410 V. Currently, a common control policy is to set a direct current voltage, of a direct current bus that is connected to a direct current side of a PFC circuit, to a specific voltage value that exceeds 410 V, for example, 430 V, to ensure stable operating of the PFC circuit. When an alternating current voltage is at a peak value, there may be a reverse voltage difference between the alternating current voltage and the direct current voltage, so that a current of an inductor in the PFC circuit can decrease to zero at a specific rate, to start a switching action in a new period. In this working condition, because the direct current voltage of the direct current bus is high, if a post-stage DC-DC converter circuit of the PFC circuit needs to output a voltage between 40 V and 60 V, a transformation ratio corresponding to a transformer in the DC-DC converter circuit needs to be large. Especially when the DC-DC converter circuit needs to output a low voltage, for example, the output voltage is 40 V, the working condition of the DC-DC converter circuit is harsh. In this case, a current flowing through a component such as a transformer, an inductor, and a capacitor in the DC-DC converter circuit may increase. In addition, switching frequency of a switch transistor in the DC-DC converter circuit may increase, which may cause an increase in an amount of heat generated. This becomes a main bottleneck of a thermal risk of the rectifier, and also becomes a main bottleneck that limits further improvement of power density in the power system. Therefore, how to improve an operating state of the DC-DC converter circuit and effectively reduce a thermal risk of a power converter within a full input alternating current voltage range is a technical problem that needs to be urgently resolved in this field.

To overcome the foregoing problem, this application provides a power converter and a control method thereof, and provides a new PFC adjustment and control policy. An operating parameter of the DC-DC converter circuit is used to determine a reference value of a direct current voltage that is output by the PFC circuit to the DC-DC converter circuit. The reference value changes with an output voltage of the DC-DC converter circuit, so that the operating state of the DC-DC converter circuit can be improved, to resolve the thermal risk of the power converter.

The following describes in detail the power converter and the control method thereof provided in this application with reference to the accompanying drawings.

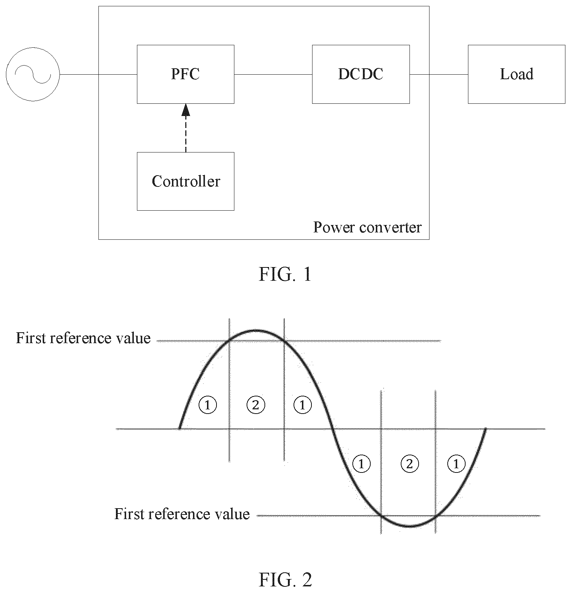

Refer to FIG. 1. The power converter provided in this application includes a power factor correction PFC circuit, a direct current-to-direct current DC-DC converter circuit, and a controller. An input end, namely, an alternating current side, of the power factor correction PFC circuit is connected to an alternating current bus and is configured to receive an alternating current voltage of a power grid. An output end, namely, a direct current side, of the power factor correction PFC circuit is connected to a direct current bus and is configured to output a direct current voltage to the direct current bus. An input end of the direct current-to-direct current DC-DC converter circuit is connected to the direct current bus and is configured to obtain the direct current voltage from the direct current bus. An output end of the direct current-to-direct current DC-DC converter circuit is connected to a load through an output bus and is configured to output a voltage to the load. The power factor correction PFC circuit is configured to: convert an input alternating current voltage into a direct current voltage and output the direct current voltage to the direct current-to-direct current DC-DC converter circuit. The direct current-to-direct current DC-DC converter circuit is configured to: perform voltage conversion on the direct current voltage and output a converted voltage to the load. The controller is separately connected to the alternating current bus, the direct current bus, and the output bus. The controller may obtain, via a collection circuit, parameters such as an alternating current voltage and an alternating current on the alternating current bus, a direct current voltage and a direct current on the direct current bus, and an output voltage and an output current on the output bus. The power factor correction PFC circuit includes components such as at least one switch transistor and an inductor. The controller may control a working state of the switch transistor in the power factor correction PFC circuit based on the collected parameters, to adjust and control the direct current voltage output by the power factor correction PFC circuit.

Refer to FIG. 2. In this application, a new PFC adjustment and control policy, that is, a hybrid modulation mode, is proposed. In the hybrid modulation mode, the controller directly determines a first reference value of the direct current voltage based on output efficiency of the direct current-to-direct current DC-DC converter circuit, where the first reference value may be less than a peak value of the alternating current voltage, and generates a first pulse width modulation (pulse width modulation, PWM) signal based on the first reference value. When an instantaneous value of the alternating current voltage is less than the first reference value, that is, at a location ① shown in the figure, the controller may, in a same manner as that in the conventional technology, control a turned-on/turned-off state of at least one switch transistor in the power factor correction PFC circuit by using the first PWM signal, that is, use a conventional PWM modulation mode to maintain an average value of the direct current voltage output by the power factor correction PFC circuit at the first reference value. When the instantaneous value of the alternating current voltage is greater than or equal to the first reference value, that is, at a location ② shown in the figure, the controller controls the at least one switch transistor in the power factor correction PFC circuit to keep in the turned-on state, so that the power factor correction PFC circuit operates in a passive rectification state. Then, energy input by the alternating current side is freely pumped into the direct current bus after passing through a component in the power factor correction PFC circuit.

In the conventional technology, to ensure stable operating of the power factor correction PFC circuit, the direct current voltage is set to increase as the alternating current voltage increases. As a result, when the alternating current voltage is high and an output voltage of the direct current-to-direct current DC-DC converter circuit is low, switching frequency needs to be increased for the direct current-to-direct current DC-DC converter circuit to meet a requirement of a working condition. This causes an increase in an amount of heat generated and an increase in a thermal risk of the power converter. In this application, in the hybrid modulation mode, the direct current voltage is set to be determined by the output efficiency of the direct current-to-direct current DC-DC converter circuit, and not to change as the alternating current voltage changes. Therefore, a stable operating state of the direct current-to-direct current DC-DC converter circuit can be ensured within a full voltage range of the alternating current voltage, and heat dissipation performance can be effectively optimized, especially in a harsh working condition, thereby avoiding the thermal risk, effectively improving stability and reliability of a power system, and improving competitiveness. When the alternating current voltage is high and the output voltage of the direct current-to-direct current DC-DC converter circuit is low, for example, in a harsh working condition of an AC of 290 V to a DC of 48 V, compared with the conventional technology in which the direct current voltage decreases significantly, the hybrid modulation mode can reduce the switching frequency in the direct current-to-direct current DC-DC converter circuit by 20%, improve working efficiency by 1%, and improve competitiveness of the power converter. In addition, due to improvement of the switching frequency in the direct current-to-direct current DC-DC converter circuit, a component design limitation of the direct current-to-direct current DC-DC converter circuit may be waived, and designs of magnetic components (such as an inductor and a transformer) may be further optimized, thereby improving the competitiveness of the entire power system.

In some embodiments of this application, in the full voltage range of the alternating current voltage, the hybrid modulation mode may be used to pull down the direct current voltage, so that the direct current-to-direct current DC-DC converter circuit keeps operating stably. In this way, when the harsh working condition occurs, that is, the alternating current voltage is high and the output voltage of the direct current-to-direct current DC-DC converter circuit is low, the thermal risk in which the amount of heat generated is increased because working frequency of the direct current-to-direct current DC-DC converter circuit needs to be increased can be effectively prevented. A modulation policy of the alternating current voltage within a full input voltage range is optimized to use the hybrid modulation mode, so that stable operating of the direct current-to-direct current DC-DC converter circuit can be ensured within the full input voltage range of the alternating current voltage, the thermal risk of the power converter can be resolved, and efficiency of a wide input/output range of the power converter can be improved, thereby improving overall commercial competitiveness of the power converter.

In some other embodiments of this application, the direct current voltage may be alternatively pulled down by using the hybrid modulation mode only in a voltage range in which the alternating current voltage may be in a harsh working condition. In this way, the direct current-to-direct current DC-DC converter circuit operates stably in the harsh working condition, and the thermal risk in which the amount of heat generated is increased because the working frequency of the direct current-to-direct current DC-DC converter circuit is increased is prevented. Specifically, when determining that the alternating current voltage is greater than or equal to a specified value, the controller may pull down the direct current voltage by using the hybrid modulation mode; and when determining that the alternating current voltage is less than the specified value, the controller may set the direct current voltage to be higher than the peak value of the alternating current voltage by using the conventional PWM modulation mode. Because the alternating current voltage is usually about 220 V, and a highest value of the alternating current voltage may be, for example, 290 V, the specified value may be set to be greater than 250 V When the controller determines that the alternating current voltage is greater than or equal to the specified value, it is considered that the power converter needs to switch the PFC adjustment and control policy to the hybrid modulation mode, to ensure stable operating of the direct current-to-direct current DC-DC converter circuit and avoid the thermal risk. When the controller determines that the alternating current voltage is less than the specified value, it is considered that the power converter needs to switch back to the PWM modulation mode, to ensure normal operating of the power factor correction PFC circuit and ensure power correction effect.

In the PWM modulation mode, the controller may determine a second reference value of the direct current voltage based on the input alternating current voltage and the output efficiency required by the direct current-to-direct current DC-DC converter circuit. In addition, to ensure normal operating of the power factor correction PFC circuit, the second reference value may be greater than the peak value of the alternating current voltage. For example, when the alternating current voltage is 220 V, the second reference value may be set to 340 V. Then, the controller may generate a second PWM signal based on the second reference value, and control the turned-on/turned-off state of the at least one switch transistor in the power factor correction circuit by using the second PWM signal, to maintain the direct current voltage output by the power factor correction circuit PFC at the second reference value. A modulation policy in a working condition in which a high alternating current voltage is input is optimized to use the hybrid modulation mode, and the PWM modulation mode can be maintained in a working condition in which a normal alternating current voltage is input, so that an operating state of the direct current-to-direct current DC-DC converter circuit can be ensured within the full input voltage range of the alternating current voltage, the thermal risk of the power converter can be resolved, and the efficiency of the wide input/output range of the power converter can be improved, thereby improving the overall commercial competitiveness of the power converter.

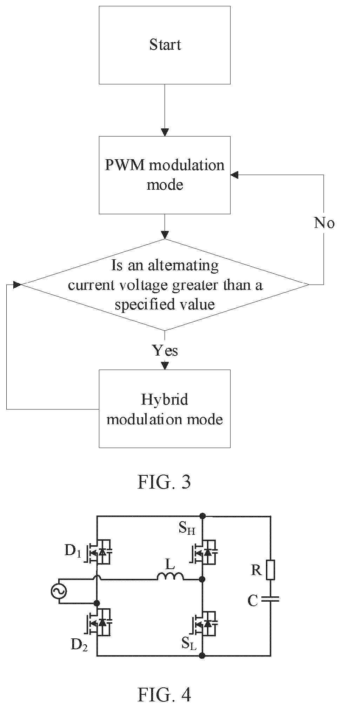

Refer to FIG. 3. In some other embodiments of this application, after the power converter is started, the PWM modulation mode may be first invoked to control the power converter to work. Then, whether the alternating current voltage is greater than the specified value is determined. If the alternating current voltage is greater than the specified value, the hybrid modulation mode is switched to. If the alternating current voltage is not greater than the specified value, the PWM modulation mode is maintained.

In this application, the power converter may be used for a single-phase alternating current input and a multi-phase alternating current input. The power factor correction PFC circuit, for example, may specifically use a single-phase boost (boost) chopper topology structure, or may use a multi-phase parallel boost topology structure. When working in the PWM modulation mode, the power factor correction PFC circuit may specifically work in a critical conduction mode (CRM), a discontinuous conduction mode (DCM), a continuous conduction mode (CCM), a transition mode (TCM), or the like.

The following describes a specific operating policy of the hybrid modulation mode by using an example in which the power converter is for the single-phase alternating current input and works in the CRM in the PWM modulation mode.

Refer to FIG. 4. The single-phase power factor correction PFC circuit may specifically include a first bridge arm and a second bridge arm that are connected in parallel, and an inductor L. The first bridge arm includes a first switch transistor S_{H} and a second switch transistor S_{L} that are connected in series. The second bridge arm includes a third switch transistor D₁ and a fourth switch transistor D₂ that are connected in series. A connection point of the first switch transistor S_{H} and the second switch transistor S_{L} is connected to one end of the power grid after being in series connected to the inductor L. A connection point of the third switch transistor D₁ and the fourth switch transistor D₂ is directly connected to the power grid. A resistor R and a bus capacitor C are connected in series at two ends of the first bridge arm and the second bridge arm that are connected in parallel. A voltage value of the resistor R and the bus capacitor C may be used as the direct current voltage on the direct current bus. The first switch transistor S_{H} and the second switch transistor S_{L} are high-frequency transistors. In the PWM modulation mode, the first switch transistor S_{H} and the second switch transistor S_{L} are alternately turned on, and are controlled by a PWM signal to perform a switching action at a high switching frequency. In the passive rectification state, one of the first switch transistor S_{H} and the second switch transistor S_{L} remains on, and the other one remains off. The third switch transistor D₁ and the fourth switch transistor D₂ work as power frequency transistors, and perform a switching action at a switching frequency of an alternating current voltage. The switching frequency of the alternating current voltage Vac is usually 50 Hz ± 10%. When the alternating current voltage is in a positive half-period, that is, when the instantaneous value of the alternating current voltage is greater than zero, the fourth switch transistor D₂ is always in the turned-on state, the third switch transistor D1 is always in the turned-off state, the second switch transistor S_{L} is a primary switch transistor, and the first switch transistor S_{H} is a synchronous switch transistor. When the alternating current voltage is in a negative half-period, that is, when the instantaneous value of the alternating current voltage is less than zero, the third switch transistor D₁ is always in the turned-on state, the fourth switch transistor D₂ is always in the turned-off state, the first switch transistor S_{H} is the primary switch transistor, and the second switch transistor S_{L} is the synchronous switch transistor.

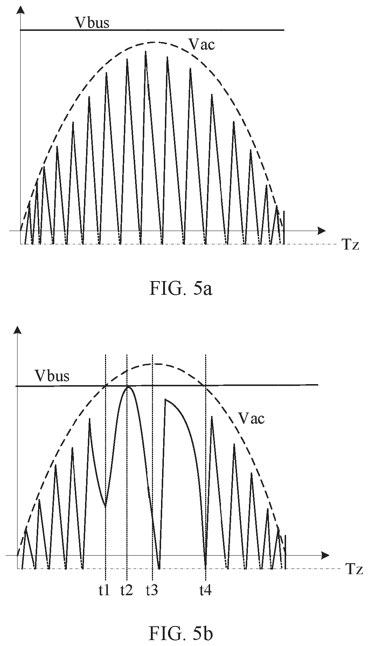

Refer to FIG. 5a. In the PWM modulation mode, the direct current voltage Vbus is always higher than the instantaneous value of the alternating current voltage Vac. The figure shows the positive half-period of the alternating current voltage Vac, and a triangular wave in the figure is a current waveform of the inductor L. When a current of the inductor L decreases to a zero-crossing Tz location, a new switching period is triggered. If the second switch transistor S_{L} serving as the primary switch transistor is turned on and the first switch transistor S_{H} serving as the synchronous switch transistor is turned off in a previous period, the second switch transistor S_{L} serving as the primary switch transistor is switched to be turned off, and the first switch transistor S_{H} serving as the synchronous switch transistor is switched to be turned on.

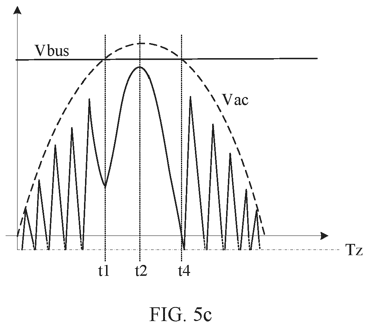

Refer to FIG. 5b and FIG. 5c. In the hybrid modulation mode, the pulled-down direct current voltage Vbus may be lower than the peak value of the alternating current voltage Vac. The figures show the positive half-periods of the alternating current voltage Vac, and triangular waves in the figures are current waveforms of the inductor L. Before a moment t1, the instantaneous value of the alternating current voltage Vac may be lower than the direct current voltage Vbus, the power converter is in the CRM mode, and the first switch transistor S_{H} and the second switch transistor S_{L} are alternately turned on. In addition, the new switching period is triggered when the current of the inductor L decreases to the zero-crossing point Tz location. FIG. 5b is used as an example. Before the moment t1 is entered, at this time, the fourth switch transistor D₂ and the first switch transistor S_{H} are turned on, and current freewheeling of the inductor L decreases the current of the inductor L. After the current of the inductor L decreases to a point at the moment t1, because the instantaneous value of the alternating current voltage Vac exceeds the direct current voltage Vbus, the fourth switch transistor D₂ and the first switch transistor S_{H} remain on at this time. This changes voltages at two ends of the inductor L from negative voltages (negative on the left and positive on the right) to positive voltages (positive on the left and negative on the right). At this time, the inductor L changes from a freewheeling state to a resonant state in which the inductor L generates resonance with the bus capacitor C. This is reflected as that the current of the inductor L changes from decreasing to increasing, and then the passive rectification state is entered. A moment t2 indicates that the inductor L resonates to a peak value point of the current. A moment t3 indicates that in a resonance process of the inductor L, if the current of the inductor L decreases to zero, switching the turned-on/turned-off state of the first switch transistor S_{H} and the second switch transistor S_{L} may be triggered. That is, for example, the second switch transistor SL is switched to be turned on. After a moment t4, the instantaneous value of the alternating current voltage Vac is lower than the direct current voltage Vbus, and the power converter changes to the CRM mode. That is, the first switch transistor S_{H} and the second switch transistor S_{L} are alternately turned on. It should be noted that, in a time period in which the instantaneous value of the alternating current voltage Vac is higher than the direct current voltage Vbus, with reference to FIG. 5b, there may be one or more t3 moments, that is, a moment at which the inductor L resonates to a point at which the current is zero; or with reference to FIG. 5c, there may be no t3 moment, that is, a moment at which the inductor L enters the moment t4 before resonating to a point at which the current is zero.

Based on a same inventive concept, an embodiment of this application further provides a control method for a power converter, including the following steps.

In a hybrid modulation mode, a first reference value of a direct current voltage output by a power factor correction circuit in the power converter is determined based on output efficiency of a direct current-to-direct current converter circuit in the power converter. The first reference value is less than a peak value of an alternating current voltage input by the power factor correction circuit. A first pulse width modulation PWM signal is generated based on the first reference value. When an instantaneous value of the alternating current voltage input by the power factor correction circuit is less than the first reference value, a turned-on/turned-off state of at least one switch transistor in the power factor correction circuit is controlled by using the first PWM signal. That is, a conventional PWM modulation mode is used to maintain an average value of the direct current voltage output by the power factor correction circuit at the first reference value. When the instantaneous value of the alternating current voltage is greater than or equal to the first reference value, the at least one switch transistor in the power factor correction circuit is controlled to keep in the turned-on state, so that the power factor correction circuit operates in a passive rectification state. Then, energy input by an alternating current side is freely pumped into the direct current bus after passing through a component in the power factor correction circuit.

In the conventional technology, to ensure stable operating of the power factor correction circuit, the direct current voltage is set to increase as the alternating current voltage increases. As a result, when the alternating current voltage is high and an output voltage of the direct current-to-direct current converter circuit is low, switching frequency needs to be increased for the direct current-to-direct current converter circuit to meet a requirement of a working condition. This causes an increase in an amount of heat generated and an increase in a thermal risk of the power converter. In this application, in the hybrid modulation mode, the direct current voltage is set to be determined by the output efficiency of the direct current-to-direct current converter circuit, and not to change as the alternating current voltage changes. Therefore, a stable operating state of the direct current-to-direct current converter circuit can be ensured within a full voltage range of the alternating current voltage, and heat dissipation performance can be effectively optimized, especially in a harsh working condition, thereby avoiding the thermal risk, effectively improving stability and reliability of a power system, and improving competitiveness. When the alternating current voltage is high and the output voltage of the direct current-to-direct current converter circuit is low, for example, in a harsh working condition of an AC of 290 V to a DC of 48 V, compared with the conventional technology in which the direct current voltage decreases significantly, the hybrid modulation mode can reduce the switching frequency in the direct current-to-direct current converter circuit by 20%, improve working efficiency by 1%, and improve competitiveness of the power converter. In addition, due to improvement of the switching frequency in the direct current-to-direct current converter circuit, a component design limitation of the direct current-to-direct current converter circuit may be waived, and designs of magnetic components (such as an inductor and a transformer) may be further optimized, thereby improving competitiveness of the entire power system.

In some embodiments of this application, in the full voltage range of the alternating current voltage, the hybrid modulation mode may be used to pull down the direct current voltage, so that the direct current-to-direct current converter circuit keeps operating stably. In this way, when the harsh working condition occurs, that is, the alternating current voltage is high and the output voltage of the direct current-to-direct current converter circuit is low, the thermal risk in which the amount of heat generated is increased because working frequency of the direct current-to-direct current converter circuit needs to be increased can be effectively prevented. A modulation policy of the alternating current voltage within a full input voltage range is optimized to use the hybrid modulation mode, so that stable operating of the direct current-to-direct current converter circuit can be ensured within the full input voltage range of the alternating current voltage, the thermal risk of the power converter can be resolved, and efficiency of a wide input/output range of the power converter can be improved, thereby improving overall commercial competitiveness of the power converter.

In some other embodiments of this application, the direct current voltage may be alternatively pulled down by using the hybrid modulation mode only in a voltage range in which the alternating current voltage may be in a harsh working condition. In this way, the direct current-to-direct current converter circuit operates stably in the harsh working condition, and the thermal risk in which the amount of heat generated is increased because the working frequency of the direct current-to-direct current converter circuit is increased is prevented. Specifically, when determining that the alternating current voltage is greater than or equal to a specified value, the controller may pull down the direct current voltage by using the hybrid modulation mode; and when determining that the alternating current voltage is less than the specified value, the controller may set the direct current voltage to be higher than the peak value of the alternating current voltage by using the conventional PWM modulation mode. Because the alternating current voltage is usually about 220 V, and a highest value of the alternating current voltage may be, for example, 290 V, the specified value may be set to be greater than 250 V When the controller determines that the alternating current voltage is greater than or equal to the specified value, it is considered that the power converter needs to switch the PFC adjustment and control policy to the hybrid modulation mode, to ensure stable operating of the direct current-to-direct current converter circuit and avoid the thermal risk. When the controller determines that the alternating current voltage is less than the specified value, it is considered that the power converter needs to switch back to the PWM modulation mode, to ensure normal operating of the power factor correction circuit and ensure power correction effect.

In the PWM modulation mode, the controller may determine a second reference value of the direct current voltage based on the input alternating current voltage and the output efficiency required by the direct current-to-direct current converter circuit. In addition, to ensure normal operating of the power factor correction circuit, the second reference value may be greater than the peak value of the alternating current voltage. For example, when the alternating current voltage is 220 V, the second reference value may be set to 340 V. Then, the controller may generate a second PWM signal based on the second reference value, and control the turned-on/turned-off state of the at least one switch transistor in the power factor correction circuit by using the second PWM signal, to maintain the direct current voltage output by the power factor correction circuit PFC at the second reference value. A modulation policy in a working condition in which a high alternating current voltage is input is optimized to use the hybrid modulation mode, and the PWM modulation mode can be maintained in a working condition in which a normal alternating current voltage is input, so that an operating state of the direct current-to-direct current converter circuit can be ensured within the full input voltage range of the alternating current voltage, the thermal risk of the power converter can be resolved, and the efficiency of the wide input/output range of the power converter can be improved, thereby improving the overall commercial competitiveness of the power converter.

In this application, the control method for the power converter may be applied to a single-phase alternating current input and a multi-phase alternating current input. The power factor correction circuit may specifically use a single-phase boost chopper (boost) topology structure, or may use a multi-phase parallel boost topology structure. When working in the PWM modulation mode, the power factor correction circuit may specifically work in a critical conduction mode (CRM), a discontinuous conduction mode (DCM), a continuous conduction mode (CCM), a transition mode (TCM), or the like.

In some embodiments of this application, the power factor correction circuit includes at least one bridge arm and at least one inductor. The bridge arm includes a first switch transistor and a second switch transistor that are connected in series. The inductor is connected to a connection point of the first switch transistor and the second switch transistor. In the passive rectification state, that is, when the instantaneous value of the alternating current voltage is greater than or equal to the first reference value, the controller controls one of the first switch transistor and the second switch transistor to be in the turned-on state and the other one to be in the turned-off state, so that the inductor is in a resonant state, and switch the turned-on/turned-off state of the first switch transistor and the second switch transistor when a current of the inductor decreases to zero.

In some embodiments of this application, in the hybrid modulation mode, when the instantaneous value of the alternating current voltage is less than the first reference value, the controller may specifically control the turned-on/turned-off state of the first switch transistor and the second switch transistor by using the critical conduction mode (CRM), the discontinuous conduction mode (DCM), the continuous conduction mode (CCM), or the transition mode (TCM).

It is clearly that a person skilled in the art can make various modifications and variations to this application without departing from the scope of this application. This application is intended to cover these modifications and variations of this application provided that they fall within the scope of protection defined by the following claims.

## Claims

1. A power converter, comprising a power factor correction circuit, a direct current-to-direct current converter circuit, and a controller, wherein
the power factor correction circuit comprises at least one bridge arm (S_{H}, S_{L}) and at least one inductor (L), the bridge arm comprises a first switch transistor and a second switch transistor that are connected in series, and the inductor is connected to a connection point of the first switch transistor and the second switch transistor; and
an output end of the power factor correction circuit is connected to an input end of the direct current-to-direct current converter circuit through a direct current bus comprising a bus capacitor (C), the power factor correction circuit is configured to: convert an input alternating current voltage into a direct current voltage and output the direct current voltage to the direct current-to-direct current converter circuit, and the direct current-to-direct current converter circuit is configured to: perform voltage conversion on the direct current voltage and output a converted voltage to a load; and
in a hybrid modulation mode, the controller is configured to determine a first reference value of the direct current voltage based on output efficiency of the direct current-to-direct current converter circuit, and generate a first pulse width modulation, PWM, signal based on the first reference value, wherein the first reference value is less than a peak value of the alternating current voltage;
when an instantaneous value of the alternating current voltage is less than the first reference value, control a turned-on/turned-off state of at least one switch transistor in the power factor correction circuit by using the first PWM signal; and
when the instantaneous value of the alternating current voltage is greater than or equal to the first reference value, control one of the first switch transistor and the second switch transistor to be in the turned-on state and the other one to be in the turned-off state, so that the inductor is in a resonant state with said bus capacitor (C),
and switch the turned-on/turned-off state of the first switch transistor and the second switch transistor when a current of the inductor decreases to zero.

2. The power converter according to claim 1, wherein the controller is configured to: when determining that the peak value of the alternating current voltage is greater than or equal to a specified value, use the hybrid modulation mode.

3. The power converter according to claim 2, wherein the controller is further configured to: when determining that the peak value of the
alternating current voltage is less than the specified value, use a PWM modulation mode; and
in the PWM modulation mode, determine a second reference value of the direct current voltage based on the alternating current voltage and the output efficiency, wherein the second reference value is greater than the peak value of the alternating current voltage, generate a second PWM signal based on the second reference value, and control the turned-on/turned-off state of the at least one switch transistor in the power factor correction circuit by using the second PWM signal.

4. The power converter according to any one of claims 1 to 3, wherein the controller is specifically configured to: when the instantaneous value of the alternating current voltage is less than the first reference value, control the turned-on/turned-off state of the first switch transistor and the second switch transistor by using a critical conduction mode, CRM, a discontinuous conduction mode, DCM, a continuous conduction mode, CCM, or a transition mode, TCM.

5. A control method for a power converter according to claim 1, comprising:
in a hybrid modulation mode, determining, based on output efficiency of a direct current-to-direct current converter circuit in the power converter, a first reference value of a direct current voltage output by a power factor correction circuit in the power converter, wherein the first reference value is less than a peak value of an alternating current voltage input by the power factor correction circuit;
generating a first pulse width modulation, PWM, signal based on the first reference value;
when an instantaneous value of the alternating current voltage is less than the first reference value, controlling a turned-on/turned-off state of at least one switch transistor in the power factor correction circuit by using the first PWM signal; and
when the instantaneous value of the alternating current voltage is greater than or equal to the first reference value,
controlling one of the first switch transistor and the second switch transistor to be in the turned-on state and the other one to be in the turned-off state, so that the inductor is in a resonant state with the bus capacitor (C), and switching the turned-on/turned-off state of the first switch transistor and the second switch transistor when a current of the inductor decreases to zero.

6. The control method according to claim 5, further comprising:
when it is determined that the peak value of the
alternating current voltage is greater than or equal to a specified value, using the hybrid modulation mode.

7. The control method according to claim 6, further comprising:
when it is determined that the peak value of the
alternating current voltage is less than the specified value, using a PWM modulation mode; and
in the PWM modulation mode, determining a second reference value of the direct current voltage based on the alternating current voltage and the output efficiency, wherein the second reference value is greater than the peak value of the alternating current voltage, generating a second PWM signal based on the second reference value, and controlling the turned-on/turned-off state of the at least one switch transistor in the power factor correction circuit by using the second PWM signal.

8. The control method according to claim any one of claims 5 to 7, wherein the controlling a turned-on/turned-off state of at least one switch transistor in the power factor correction circuit by using the first PWM signal specifically comprises:
controlling the turned-on/turned-off state of the first switch transistor and the second switch transistor by using a critical conduction mode, CRM, a discontinuous conduction mode, DCM, a continuous conduction mode, CCM, or a transition mode, TCM.

## Patentansprüche

1. Leistungswandler, umfassend eine Leistungsfaktorkorrekturschaltung, eine Gleichstrom-Gleichstrom-Wandlerschaltung und eine Steuerung, wobei die Leistungsfaktorkorrekturschaltung mindestens einen Brückenzweig (S_{H}, S_{L}) und mindestens einen Induktor (L) umfasst, wobei der Brückenzweig einen ersten Schalttransistor und einen zweiten Schalttransistor umfasst, die in Reihe geschaltet sind, und der Induktor mit einem Verbindungspunkt des ersten Schalttransistors und des zweiten Schalttransistors verbunden ist; und
ein Ausgangsende der Leistungsfaktorkorrekturschaltung über einen Gleichstrombus, der einen Buskondensator (C) umfasst, mit einem Eingangsende der Gleichstrom-Gleichstrom-Wandlerschaltung verbunden ist,
die Leistungsfaktorkorrekturschaltung zu Folgendem konfiguriert ist: Umwandeln einer Eingangswechselspannung in eine Gleichspannung und Ausgeben der Gleichspannung an die Gleichstrom-Gleichstrom-Wandlerschaltung, und die Gleichstrom-Gleichstrom-Wandlerschaltung zu Folgendem konfiguriert ist:
Durchführen einer Spannungsumwandlung an der Gleichspannung und Ausgeben einer umgewandelten Spannung an eine Last; und
in einem Hybridmodulationsmodus die Steuerung zu Folgendem konfiguriert ist: Bestimmen eines ersten Referenzwerts der Gleichspannung basierend auf einem Ausgangswirkungsgrad der Gleichstrom-Gleichstrom-Wandlerschaltung und Erzeugen eines ersten Pulsweitenmodulations(PWM)-Signals basierend auf dem ersten Referenzwert, wobei der erste Referenzwert kleiner als ein Spitzenwert der Wechselspannung ist;
wenn ein Momentanwert der Wechselspannung kleiner als der erste Referenzwert ist, Steuern eines Ein-/Aus-Zustands mindestens eines Schalttransistors in der Leistungsfaktorkorrekturschaltung durch Verwenden des ersten PWM-Signals; und
wenn der Momentanwert der Wechselspannung größer oder gleich dem ersten Referenzwert ist, Steuern eines von dem ersten Schalttransistor und dem zweiten Schalttransistor, um in dem Ein-Zustand zu sein, und des anderen, um in dem Aus-Zustand zu sein, so dass sich der Induktor in einem Resonanzzustand mit dem Buskondensator (C) befindet,
und Umschalten des Ein-/Aus-Zustands des ersten Schalttransistors und des zweiten Schalttransistors, wenn ein Strom des Induktors auf Null absinkt.

2. Leistungswandler nach Anspruch 1, wobei die Steuerung zu Folgendem konfiguriert ist: wenn bestimmt wird, dass der Spitzenwert der Wechselspannung größer oder gleich einem definierten Wert ist, Verwenden des Hybridmodulationsmodus.

3. Leistungswandler nach Anspruch 2, wobei die Steuerung ferner zu Folgendem konfiguriert ist: wenn bestimmt wird, dass der Spitzenwert der Wechselspannung kleiner als der definierte Wert ist, Verwenden eines PWM-Modulationsmodus; und
in dem PWM-Modulationsmodus Bestimmen eines zweiten Referenzwerts der Gleichspannung basierend auf der Wechselspannung und dem Ausgangswirkungsgrad, wobei der zweite Referenzwert größer als der Spitzenwert der Wechselspannung ist, Erzeugen eines zweiten PWM-Signals basierend auf dem zweiten Referenzwert und Steuern des Ein-/Aus-Zustands des mindestens einen Schalttransistors in der Leistungsfaktorkorrekturschaltung durch Verwenden des zweiten PWM-Signals.

4. Leistungswandler nach einem der Ansprüche 1 bis 3, wobei die Steuerung speziell zu Folgendem konfiguriert ist: wenn der Momentanwert der Wechselspannung kleiner als der erste Referenzwert ist, Steuern des Ein-/Aus-Zustands des ersten Schalttransistors und des zweiten Schalttransistors durch Verwenden eines kritischen Leitungsmodus (CRM), eines diskontinuierlichen Leitungsmodus (DCM), eines kontinuierlichen Leitungsmodus (CCM) oder eines Übergangsmodus (TCM).

5. Steuerungsverfahren für einen Leistungswandler nach Anspruch 1, umfassend:
in einem Hybridmodulationsmodus Bestimmen, basierend auf einem Ausgangswirkungsgrad einer Gleichstrom-Gleichstrom-Wandlerschaltung in dem Leistungswandler, eines ersten Referenzwerts einer durch eine Leistungsfaktorkorrekturschaltung in dem Leistungswandler ausgegebenen Gleichspannung, wobei der erste Referenzwert kleiner als ein Spitzenwert einer durch die Leistungsfaktorkorrekturschaltung eingespeisten Wechselspannung ist;
Erzeugen eines ersten Pulsweitenmodulations(PWM)-Signals basierend auf dem ersten Referenzwert;
wenn ein Momentanwert der Wechselspannung kleiner als der erste Referenzwert ist, Steuern eines Ein-/Aus-Zustands mindestens eines Schalttransistors in der Leistungsfaktorkorrekturschaltung durch Verwenden des ersten PWM-Signals; und
wenn der Momentanwert der Wechselspannung größer oder gleich dem ersten Referenzwert ist,
Steuern eines von dem ersten Schalttransistor und dem zweiten Schalttransistor, um in dem Ein-Zustand zu sein, und des anderen, um in dem Aus-Zustand zu sein, so dass sich der Induktor in dem Resonanzzustand mit dem Buskondensator (C) befindet,
und Umschalten des Ein-/Aus-Zustands des ersten Schalttransistors und des zweiten Schalttransistors, wenn ein Strom des Induktors auf Null absinkt.

6. Steuerungsverfahren nach Anspruch 5, ferner umfassend:
wenn bestimmt wird, dass der Spitzenwert der Wechselspannung größer oder gleich einem definierten Wert ist, Verwenden des Hybridmodulationsmodus.

7. Steuerungsverfahren nach Anspruch 6, ferner umfassend:
wenn bestimmt wird, dass der Spitzenwert der Wechselspannung kleiner als der definierte Wert ist, Verwenden eines PWM-Modulationsmodus; und
in dem PWM-Modulationsmodus Bestimmen eines zweiten Referenzwerts der Gleichspannung basierend auf der Wechselspannung und dem Ausgangswirkungsgrad, wobei der zweite Referenzwert größer als der Spitzenwert der Wechselspannung ist, Erzeugen eines zweiten PWM-Signals basierend auf dem zweiten Referenzwert und Steuern des Ein-/Aus-Zustands des mindestens einen Schalttransistors in der Leistungsfaktorkorrekturschaltung durch Verwenden des zweiten PWM-Signals.

8. Steuerungsverfahren nach einem der Ansprüche 5 bis 7, wobei das Steuern eines Ein-/Aus-Zustands mindestens eines Schalttransistors in der Leistungsfaktorkorrekturschaltung durch Verwenden des ersten PWM-Signals speziell Folgendes umfasst:
Steuern des Ein-/Aus-Zustands des ersten Schalttransistors und des zweiten Schalttransistors durch Verwenden eines kritischen Leitungsmodus (CRM), eines diskontinuierlichen Leitungsmodus (DCM), eines kontinuierlichen Leitungsmodus (CCM) oder eines Übergangsmodus (TCM).

## Revendications

1. Convertisseur de puissance, comprenant un circuit de correction du facteur de puissance, un circuit convertisseur courant continu-courant continu et un dispositif de commande, dans lequel
le circuit de correction du facteur de puissance comprend au moins un bras de pont (S_{H}, S_{L}) et au moins une inductance (L), le bras de pont comprend un premier transistor de commutation et un second transistor de commutation reliés en série, et l'inductance est reliée à un point de connexion du premier transistor de commutation et du second transistor de commutation ; et
une extrémité de sortie du circuit de correction du facteur de puissance est reliée à une extrémité d'entrée du circuit convertisseur courant continu-courant continu par l'intermédiaire d'un bus de courant continu comprenant un condensateur de bus (C),
le circuit de correction du facteur de puissance est configuré pour : convertir une tension de courant alternatif d'entrée en une tension de courant continu et fournir la tension de courant continu au circuit convertisseur courant continu-courant continu, et le circuit convertisseur courant continu-courant continu est configuré pour : réaliser la conversion de tension sur la tension de courant continu et fournir une tension convertie à une charge ; et
en mode de modulation hybride, le dispositif de commande est configuré pour : déterminer une première valeur de référence de la tension de courant continu sur la base du rendement de sortie du circuit convertisseur courant continu-courant continu, et générer un premier signal de modulation de largeur d'impulsion, PWM, sur la base de la première valeur de référence, dans lequel la première valeur de référence est inférieure à une valeur de crête de la tension de courant alternatif ;
lorsque la valeur instantanée de la tension du courant alternatif est inférieure à la première valeur de référence, commander le passage à l'état passant/bloqué d'au moins un transistor de commutation dans le circuit de correction du facteur de puissance à l'aide du premier signal PWM ; et lorsque la valeur instantanée de la tension du courant alternatif est supérieure ou égale à la première valeur de référence, commander l'un du premier transistor de commutation et du second transistor de commutation de passer à l'état passant et l'autre à l'état bloqué, de sorte que l'inductance soit en état de résonance avec ledit condensateur de bus (C),
et commuter l'état passant/bloqué du premier transistor de commutation et du second transistor de commutation lorsque le courant de l'inductance diminue à zéro.

2. Convertisseur de puissance selon la revendication 1, dans lequel le dispositif de commande est configuré pour : lorsqu'il est déterminé que la valeur de crête de la tension du courant alternatif est supérieure ou égale à une valeur spécifiée, utiliser le mode de modulation hybride.

3. Convertisseur de puissance selon la revendication 2, dans lequel le dispositif de commande est en outre configuré pour :
lorsqu'il est déterminé que la valeur de crête de la tension du courant alternatif est inférieure à la valeur spécifiée, utiliser un mode de modulation PWM ; et
en mode de modulation PWM, déterminer une seconde valeur de référence de la tension de courant continu sur la base de la tension de courant alternatif et du rendement de sortie, dans lequel la seconde valeur de référence est supérieure à la valeur de crête de la tension de courant alternatif, générer un second signal PWM sur la base de la seconde valeur de référence et commander le passage à l'état passant/bloqué de l'au moins un transistor de commutation dans le circuit de correction du facteur de puissance à l'aide du second signal PWM.

4. Convertisseur de puissance selon l'une quelconque des revendications 1 à 3, dans lequel le dispositif de commande est spécifiquement configuré pour : lorsque la valeur instantanée de la tension du courant alternatif est inférieure à la première valeur de référence, commander le passage à l'état passant/bloqué du premier transistor de commutation et du second transistor de commutation en utilisant un mode de conduction critique, CRM, un mode de conduction discontinu, DCM, un mode de conduction continu, CCM, ou un mode de transition, TCM.

5. Procédé de commande pour convertisseur de puissance selon la revendication 1, comprenant :
en mode de modulation hybride, la détermination, sur la base du rendement de sortie d'un circuit convertisseur courant continu-courant continu dans le convertisseur de puissance, d'une première valeur de référence d'une tension de courant continu de sortie par un circuit de correction du facteur de puissance dans le convertisseur de puissance, dans lequel la première valeur de référence est inférieure à une valeur de crête d'une tension de courant alternatif d'entrée par le circuit de correction du facteur de puissance ;
la génération d'un premier signal de modulation de largeur d'impulsion, PWM, sur la base de la première valeur de référence ;
lorsque la valeur instantanée de la tension du courant alternatif est inférieure à la première valeur de référence, la commande du passage à l'état passant/bloqué d'au moins un transistor de commutation dans le circuit de correction du facteur de puissance à l'aide du premier signal PWM ; et
lorsque la valeur instantanée de la tension du courant alternatif est supérieure ou égale à la première valeur de référence,
la commande de l'un du premier transistor de commutation et du second transistor de commutation pour passer à l'état passant et l'autre à l'état bloqué, de sorte que l'inductance soit dans un état résonant avec le condensateur de bus (C),
et la commutation de l'état passant/bloqué du premier transistor de commutation et du second transistor de commutation lorsque le courant de l'inductance diminue à zéro.

6. Procédé de commande selon la revendication 5, comprenant en outre :
lorsqu'il est déterminé que la valeur de crête de la tension du courant alternatif est supérieure ou égale à une valeur spécifiée, l'utilisation du mode de modulation hybride.

7. Procédé de commande selon la revendication 6, comprenant en outre :
lorsqu'il est déterminé que la valeur de crête de la tension du courant alternatif est inférieure à la valeur spécifiée, l'utilisation d'un mode de modulation PWM ; et
en mode de modulation PWM, la détermination d'une seconde valeur de référence de la tension de courant continu sur la base de la tension de courant alternatif et du rendement de sortie, dans lequel la seconde valeur de référence est supérieure à la valeur de crête de la tension de courant alternatif, la génération d'un second signal PWM sur la base de la seconde valeur de référence et la commande de passer à l'état passant/bloqué de l'au moins un transistor de commutation dans le circuit de correction du facteur de puissance à l'aide du second signal PWM.

8. Procédé de commande selon l'une quelconque des revendications 5 à 7, dans lequel la commande de passer à l'état passant/bloqué d'au moins un transistor de commutation dans le circuit de correction du facteur de puissance à l'aide du premier signal PWM comprend spécifiquement :
la commande de passer à l'état passant/bloqué du premier transistor de commutation et du second transistor de commutation en utilisant un mode de conduction critique (CRM), un mode de conduction discontinu (DCM), un mode de conduction continu (CCM) ou un mode de transition (TCM).
